# EUROPEAN PATENT APPLICATION

(11) **EP 4 742 547 A1**
(43) Date of publication of application: **13.05.2026**
(21) Application number: 24211873.5
(22) Date of filing: 08.11.2024
(51) Int. Cl.: H04B 1/18

(54) **RECEIVER CIRCUIT**

(71) Applicant: NXP B.V., 5656 AG Eindhoven (NL)
(72) Inventor: ZOESCHER, Lukas, 5656 AG Eindhoven (NL); MALINOWSKI, Slawomir Rafal, 5656 AG Eindhoven (NL); MEULMEESTER, Jacobus de, 5656 AG Eindhoven (NL); FINA, Thomas, 5656 AG Eindhoven (NL)
(74) Representative: Krott, Michel

(57) **Abstract**

A wireless receiver circuit comprising terminals for coupling to an antenna and an impedance tuning circuit coupled between the terminals and a receiver path. The impedance tuning circuit being controllable to provide at least two impedance levels. A measurement circuit coupled to the impedance tuning circuit and configured to measure a voltage or current indicative of a signal received by the antenna for each of the at least two impedance levels. A timing circuit comprising one or more delay lines, wherein the one or more delay lines are configured to receive an initialization signal from the measurement circuit or the impedance tuning circuit. The timing circuit configured to provide one or more delayed signals to control of one or both of the measurement circuit and the impedance tuning circuit to measure the voltage or current for each of the two impedance levels.

## Description

### Field

The present disclosure relates to a receiver circuit, in particular, to a wireless receiver circuit. It also relates to a method for controlling said wireless receiver circuit and also to an electronic device comprising said wireless receiver circuit.

### Background

Impedance matching between circuit components is important to ensure good coupling between wirelessly coupled devices, such as radio-frequency ID (RFID) tags. The coupling between devices can be improved by tuning the impedance of the wireless receiver circuit. Obtaining a good impedance match between components in the wireless receiver circuit is challenging and typically consumes additional power leading to reduced overall performance.

### Summary

According to a first aspect of the present disclosure there is provided a wireless receiver circuit comprising:
terminals for coupling to an antenna;
an impedance tuning circuit coupled between the terminals and a receiver path, wherein the impedance tuning circuit is controllable to provide at least two impedance levels;
a measurement circuit coupled to the impedance tuning circuit and configured to measure a voltage or current indicative of a signal received by the antenna for each of the at least two impedance levels; and
a timing circuit comprising one or more delay lines, wherein the one or more delay lines are configured to receive an initialization signal from the measurement circuit or the impedance tuning circuit and to provide one or more delayed signals to control of one or both of the measurement circuit and the impedance tuning circuit to measure the voltage for each of the two impedance levels.

In one or more examples, the initialization signal is based on a signal received from the antenna via the terminals.

In one or more examples, the initialization signal may be provided to the timing circuit or to the one or more delay lines from a control circuit.

In one or more embodiments said control of one or both of the measurement circuit and the impedance tuning circuit to measure the voltage for each of the two impedance levels comprises:
the impedance tuning circuit being configured to receive at least one of the one or more delayed signals to sequentially select one of the at least two impedance levels.

In one or more embodiments said control of one or both of the measurement circuit and the impedance tuning circuit to measure the voltage for each of the two impedance levels comprises the measurement circuit being configured to receive at least one of the one or more delayed signals to:
sample and hold a first voltage for a first of the at least two impedance levels;
sample and hold a second voltage for a second of the at least two impedance levels; and
compare the first voltage and the second voltage for determining which of the first impedance level and second impedance level of the at least two impedance levels to select to receive future, further signals.

In one or more embodiments said control of one or both of the measurement circuit and the impedance tuning circuit to measure the voltage for each of the at least two impedance levels includes:
selection of one of the at least two impedance levels based on which impedance level provides the highest voltage or current as measured by the measurement circuit.

In one or more embodiments the wireless receiver circuit comprises a control circuit comprising one or more logic gates configured to provide for said control of one or both of the measurement circuit and the impedance tuning circuit and wherein the one or more delayed signals are configured to control said one or more logic gates.

In one or more embodiments the wireless receiver circuit includes an envelope detector coupled between the impedance tuning circuit and the measurement circuit, the envelope detector configured to output an envelope voltage indicative of an envelope of the signal received by the antenna, wherein the envelope voltage comprises said voltage indicative of the signal received by the antenna.

In one or more embodiments the measurement circuit further comprises a comparator configured to compare:
the envelope voltage indicative of the signal received by the antenna for a first of the at least two impedance levels, and
the envelope voltage indicative of the signal received by the antenna for a second of the at least two impedance levels, and
provide an output indicative of which of the envelope voltages is the highest for use in setting the impedance tuning circuit to one of the at least two impedance levels that resulted in the highest envelope voltage.

In one or more embodiments the control circuit is configured to receive the output of the comparator, and based on the output of the comparator, output the initialization signal to the timing circuit, wherein
each of the one or more delay lines of the timing circuit is configured to output a respective one of the one or more delayed signals.

In one or more embodiments a first delayed signal of the one or more delayed signals defines a time period for the measurement circuit to measure the envelope voltage, and
a second delayed signal of the one or more delayed signals provides a feedback signal to the control circuit indicative of a start of a timing cycle to initiate said control circuit.

In one or more embodiments the impedance tuning circuit comprises one or more of:
switchable and/or variable capacitors; or
switchable and/or variable inductors
and the switchable and/or variable capacitors or the switchable and/or variable inductors are selectively controlled by the impedance tuning circuit to switch between each of the at least two impedance levels.

In one or more embodiments the first delayed signal defines a comparison phase during which the comparator is configured to compare the envelope voltage to the first voltage or the second voltage, and
the second delayed signal defines a sampling phase during which the measurement circuit is configured to:
sample and hold the first voltage for the first of the at least two impedance levels; and
sample and hold the second voltage for the second of the at least two impedance levels.

In one or more embodiments the timing circuit is configured such that timing characteristics of the one or more delayed signals are based on a signal level or signal level change of: a signal received by the antenna; the initialization signal; a signal output by the impedance tuning circuit; a signal output by the measurement circuit; a signal output by the control circuit; or a further signal received by the control circuit.

In one or more examples the duration of the first delayed signal or the second delayed signal may be controlled on said measured parameter of the signal received by the antenna.

In one or more examples the relative delay between the first delayed signal and the second delayed signal may be controlled based on said measured parameter of the signal received by the antenna.

In one or more examples, the relative delay between the initialization signal and either the first delayed signal or the second delayed signal may be controlled based said measured parameter of the signal received by the antenna.

In one or more embodiments the control circuit is configured provide one or more signals to control the measurement circuit to provide a sample and hold phase having a predetermined duration based on a corresponding duration of at least one of the one or more delayed signals and wherein the control circuit is further configured to end the sample and hold phase prior to expiry of the predetermined duration based on a comparison by the measurement circuit being indicative that a currently selected impedance level of the at least two impedance levels provides a greater voltage than a previously measured voltage resulting from selection of another of the at least two impedance levels.

According to a second aspect of the present disclosure there is provided a method of operating a wireless receiver circuit comprising:
terminals for coupling to an antenna, an impedance tuning circuit coupled between the terminals and a receiver path; a measurement circuit coupled to the impedance tuning circuit; and a timing circuit comprising one or more delay lines; the method comprising:
providing an initialization signal to the timing circuit based on a signal received by the antenna;
receiving one or more delayed signals from the one or more delay lines;
providing said one or more delayed signals to control of one or both of the impedance tuning circuit and the measurement circuit for use in measuring a voltage or current indicative of a signal received by the antenna for each of at least two impedance levels provided by the impedance tuning circuit.

According to a third aspect of the present disclosure there is provided n RFID tag comprising the wireless receiver circuit of any of claims 1-13.

While the disclosure is amenable to various modifications and alternative forms, specifics thereof have been shown by way of example in the drawings and will be described in detail. It should be understood, however, that other embodiments, beyond the particular embodiments described, are possible as well. All modifications, equivalents, and alternative embodiments falling within the spirit and scope of the appended claims are covered as well.

The above discussion is not intended to represent every example embodiment or every implementation within the scope of the current or future Claim sets. The figures and Detailed Description that follow also exemplify various example embodiments. Various example embodiments may be more completely understood in consideration of the following Detailed Description in connection with the accompanying Drawings.

### Brief Description of the Drawings

One or more embodiments will now be described by way of example only with reference to the accompanying drawings in which:
Figure 1 shows an example embodiment of a wireless receiver circuit;
Figure 2 shows an example timing diagram illustrating the control signals and the delayed signals according to an embodiment;
Figure 3 shows an implementation of a delay line according to an embodiment;
Figure 4 shows an example method of operating the wireless receiver circuit of figure 1; and
Figure 5 shows an electronic device comprising the wireless receiver circuit of figure 1.

### Detailed Description

The examples of the present disclosure relate to a wireless receiver circuit that is configured to provide for automatic tuning of the impedance of the wireless receiver circuit based on a voltage measured at the antenna coupled to said wireless receiver circuit. The wireless receiver circuit may be a wireless receiver circuit of an RFID tag.

Typically, adjustment of the input impedance of a wireless receiver circuit, such as that in an RFID tag, is necessary to achieve an antenna coupling of a desired level. Adjustment of the input impedance of the wireless receiver circuit may provide for improved coupling between the antenna and the wireless receiver circuit and, in turn, receipt of a higher antenna voltage for a given received signal.

It is known to provide impedance matching using a tuneable input impedance and a circuit that automatically adjusts the input impedance based on one or more sample measurements. Such systems are termed auto-tuning impedance matching circuits. Typical auto-tuning impedance matching circuits require synchronous digital logic which requires an oscillator for providing a clock signal with a specific frequency. However, for implementations where power efficiency is important, known auto-tuning impedance matching circuits are not ideal.

The present embodiments describe an auto-tuning impedance matching circuit that operates asynchronously, i.e. without use of a clock to control the auto-tuning process. In any of the embodiments of a wireless receiver circuit herein, an oscillator or other clock source may be present, but may be configured in a disabled mode to reduce the power consumption during the auto-tuning impedance matching process.

In some examples the wireless receiver circuit described herein may be a passive RFID tag. Thus, the wireless receiver circuit of the RFID tag may extract power for the operation of the wireless receiver circuit from the received signal. The tuning of the input impedance of such wireless receiver circuits of such passive RFID tag integrated circuits (ICs) ideally requires low power consumption.

Known auto-tuning circuits that use synchronous logic and a fixed clock frequency exhibit following disadvantages, particularly at low receive power levels:
- Require extra power consumption due to the analog circuits (e.g., oscillator and level shifters) necessary for providing the clock frequency to the digital auto-tuning logic.
- Require extra power consumption due to the digital logic gates of the auto-tuning control logic that is operated at a fixed clock frequency.
- The impact of the clock frequency variation due to process and temperature variation cannot be accounted for and can result in a longer execution time or increased power consumption.
- A further risk is that the oscillator may not power-up at all at low supply voltage levels (i.e. during low received power conditions).

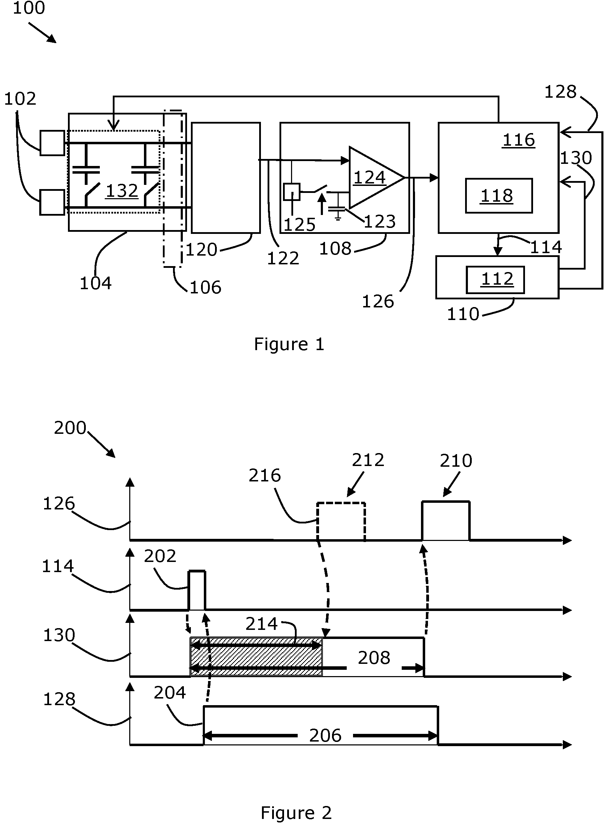

Figure 1 shows an example embodiment of a wireless receiver circuit 100 comprising terminals 102 for coupling to an antenna (not shown).

Figure 1 further shows an impedance tuning circuit 104 coupled between the terminals 102 and a receiver path 106. The receiver path may include typical components present in an RFID tag for receiving and interpreting signals received by the antenna and is therefore shown schematically as a box. It will be appreciated that the impedance tuning circuit 104 is arranged to adjust the impedance matching between the antenna that is coupled to the terminals 102 and the circuitry of the receiver path 106. Controlling the impedance matching can ensure that the signal received by the antenna is not reflected back and can be provided to the receiver path with lower signal loss than compared to if there is no impedance match between the antenna and the receiver path 106. The impedance tuning circuit 104 is controllable to provide at least two impedance levels. The example of figure 1 shows an impedance tuning circuit 104 formed of two switchable capacitors 132 which are configured and arranged to provide the at least two impedance levels.

In this example the capacitors can be arranged in three possible impedance configurations. However, it will be appreciated that the number of capacitors may be more than two and the control of these components may allow for more than three different impedance levels. In other examples, instead of switchable capacitors 132, variable capacitors may be used to control the resulting impedance of the impedance tuning circuit. It will also be appreciated that whilst capacitors are shown in the impedance tuning circuit 104, other components such as inductors (either fixed or variable) may be used in place of or in addition to the capacitors shown in the impedance tuning circuit for providing controllable impedance levels of the impedance tuning circuit.

In a further example, the impedance of the impedance tuning circuit 104 may be controlled by including other switchable and/or variable electrical reactive elements in addition to or instead of the switchable capacitors and/or inductors described above. Thus, in some examples this may include discrete or lumped tuning networks and may also include transmission lines.

In general, the impedance tuning circuit includes one or more capacitors and/or inductors to provide at least two different impedance levels wherein the one or more capacitors and/or inductors may be switched or otherwise controllable to provide the impedance levels.

For the example shown in figure 1, the capacitors can be arranged in three possible configurations, these are:
1) A first impedance configuration, where both capacitors are disconnected (i.e. the minimum capacitance),
2) A second impedance configuration, where only one capacitor is connected (i.e. medium capacitance), and
3) A third impedance configuration, where both capacitors are connected (i.e. the maximum capacitance).

In the present example both capacitors are of the same capacitance, but in other examples each capacitor may have a different capacitance thereby allowing a fourth configuration whilst still only requiring three capacitors. In this case, the alternate capacitors can be individually connected in the impedance tuning circuit 104.

It will also be appreciated that environmental factors can affect the impedance of the wireless receiver circuit 100 and the connected antenna. Thus, the fact that the impedance tuning circuit 104 is controllable can compensate for changes due to those environmental factors to maintain a good impedance match between the antenna and the receiver path 106 to thereby improve the overall performance of the device in which such a wireless receiver circuit 100 is used.

The wireless receiver circuit 100 further comprises a measurement circuit 108 coupled to the impedance tuning circuit 104. The measurement circuit 108 is configured to measure a voltage or current indicative of a signal received by the antenna for each of the at least two impedance levels.

The wireless receiver circuit 100 of figure 1 further shows a timing circuit 110 comprising one or more delay lines 112. The one or more delay lines 112 are configured to receive an initialization signal 114 that may be derived from the measurement circuit 108. In other examples the initialization signal 114 may be derived from the impedance matching circuit 104. The initialization signal may be generated as the result of an initial signal being received by the antenna. The one or more delay lines 112 provide one or more delayed signals to control one or both of the measurement circuit 108 and the impedance tuning circuit 104 to measure the voltage or current for each of the two impedance levels. It will be appreciated that in some examples the initialization signal 114 may be provided from an external source. For example, the initialization signal 114 may be provided by another sub-circuit of wireless receiver 100. In some examples the initialization signal 114 may be provided based on an internal voltage of the wireless receiver circuit 100 reaching a predetermined level. The resulting delayed signals from the one or more delay lines 112 can be used to control a process by which the measurement circuit 108 measures the voltage at the terminals and/or controls the impedance tuning circuit 104 to control/change its impedance. Thus, advantageously, in the present example embodiment, the one or more delayed signals may control at least part of the auto-tuning process for impedance matching whereby an impedance level of the impedance tuning circuit 104 is selected for receipt of future signals by the receiver path 106. In some examples, the timing characteristics such as a delay and/or pulse width of the delayed signals provided by the one or more delay lines 112 may be dependent on the level of the signal received by the antenna or changes in the level of the signal received by the antenna. In some examples the level or the change to the level of the signal received by the antenna is determined by the measurement circuit 108 or another sub-circuit of the wireless receiver circuit 100 to reduce the execution time of an auto-tuning procedure.

In one example, for the first impedance configuration, the measurement circuit 108 of the wireless receiver circuit 100 may be configured to initially sample the voltage indicative of a first signal received at the antenna. The impedance tuning circuit 104 may then be adjusted to provide the second impedance configuration and the voltage indicative of a second signal received at the antenna is sampled. The first and second signal may be received as part of an RFID communication protocol. The measurement circuit may be configured such that the voltage measured for the first impedance configuration is compared to the voltage sampled for the second impedance configuration to determine which impedance configuration provides a greater (or otherwise preferred) voltage. Typically, it is preferred that there is strong antenna coupling between the RFID transmitter and the RFID tag and the impedance of the antenna at such a time is matched to the receiver path. Thus, the voltage received via the impedance tuning circuit 104 is preferably high. However, in other examples, it may be preferred that the voltage is within a preferred range rather than as high as possible.

It will be appreciated that sampling a voltage (or current) for comparison with another voltage can take time to accurately sample and hold the voltage levels. Thus, sampling a signal may be performed over a time to allow for the voltage to settle. To accommodate the settling time, the present example wireless receiver circuit 100 utilises the timing circuit 110 and the associated one or more delay lines 112 to define a time over which a sample and hold process is performed.

In general, the auto-tuning process that provides the impedance matching described herein comprises switching between the impedance levels and sampling a voltage representative of a received signal to determine which of the impedance levels provides a desirable (e.g. highest) voltage level for the receiver path 106. This process requires at least two of the impedance levels to be sequentially selected and a sample and hold process to be performed. The one or more delayed signals provided by the delay lines 112 have been found to provide a low-power way of controlling one or more of these processes. Once the impedance level is set, subsequently received signals are received by a wireless receiver circuit 100 that is impedance matched (to a degree allowable by the possible impedance levels) thereby allowing for reliable receipt by the receiver path 106.

In some examples the impedance tuning circuit 104 may be configured to receive at least one of the one or more delayed signals to sequentially select one of the at least two impedance levels. In some examples the impedance tuning circuit 104 may be configured to start with the first impedance configuration (i.e. the minimum capacitance level) and after a duration defined by at least one of the one or more delayed signals, the impedance tuning circuit 104 may be configured to switch to the second impedance configuration (i.e. the medium capacitance level) or from the second impedance configuration to the third impedance configuration (i.e. the highest capacitance level).

In other examples, the initial configuration of the impedance tuning circuit 104 may be one in which the capacitor arrangement results in the middle (or other) impedance value of the three impedance values. Once the voltage at the antenna is sampled, the impedance tuning circuit 104 may then sequentially select the capacitor arrangement that results in a lower impedance value and repeat the measurement of the antenna voltage before returning to the initial configuration. The antenna voltage may be measured for the initial configuration again. The impedance tuning circuit 104 can then be controlled to provide the arrangement which results in a higher impedance value and for the measurement circuit 108 to measure the voltage on the antenna for this third (higher) impedance level.

It will be appreciated that when the impedance tuning circuit 104 selectively changes the impedance, the wireless receiver circuit may be configured to wait for a duration defined by at least one of the one or more delayed signals to ensure the voltage has settled before the measurement circuit 108 measures the voltage. This is to ensure the measured voltage has settled.

In some examples the measurement circuit 108 may be configured to receive at least one of the one or more delayed signals whereby the at least one of the one or more delayed signals defines a duration to enable the measurement circuit 108 to sample and hold a first voltage for a first of the at least two impedance levels and to sample and hold a second voltage for a second of the at least two impedance levels. The measurement circuit 108 is further configured to compare the first voltage and the second voltage for determining which of the first impedance level and second impedance level of the at least two impedance levels result in a higher voltage and to select the respective impedance level to set the impedance tuning circuit 104 to receive future, further signals.

It will be appreciated that the future further signals are subsequent signals that will be received by the wireless receiver circuit 100. The process of selecting the impedance level that results in a higher voltage ensures that these future, further signals are also received by the wireless receiver circuit with the impedance level that results in the highest measured voltage.

In some examples the selection of the one of the at least two impedance levels is based on which impedance level provides the highest voltage as measured by the measurement circuit 108.

In some examples, to measure the voltage indicative of the signal received by the antenna, the wireless receiver circuit 100 further includes an envelope detector 120 as shown in figure 1. This envelope detector 120 is coupled between the impedance tuning circuit 104 and the measurement circuit 108. The envelope detector 120 may be configured to output an envelope voltage 122 indicative of an envelope of the signal received by the antenna. It will be appreciated that the envelope detector 120 may be configured to extract the envelope signal of the RF input voltage (this is the signal received by the antenna). It will be appreciated that in other examples the envelope detector 120 may be replaced by alternative components that can be used to determine the peak value of the signal received by the antenna.

In the present example, the measurement circuit 108 includes a comparator 124. This comparator 124 may be configured to compare the envelope voltage 122 that is indicative of the signal received by the antenna for the first of the at least two impedance levels, and the envelope voltage 122 indicative of the signal received by the antenna for a second of the at least two impedance levels.

The present example includes a control circuit 116 comprising one or more logic gates 118 configured to provide for said control of one or both of the measurement circuit 108 and the impedance tuning circuit 104 and wherein the one or more delayed signals are configured to control said one or more logic gates 118. This is advantageous as the logic gates can be configured to perform the auto-tuning process and be triggered by the timing of the one or more delayed signals. Accordingly, in the present example, the one or more delayed signals are provided to the control circuit 116 and the control circuit, based on predetermined logic defined by the logic gates, is configured to provide signals to control one or both of the measurement circuit 108 and impedance tuning circuit 104. Accordingly, the control circuit 116 of the present example operates asynchronously, without a reference clock. Instead, the configuration of the delay lines 112 provides the control circuit 116 with one or more delayed signals that trigger the logic gates at appropriate times to orchestrate the auto-tuning of the input impedance.

The comparator 124 may be configured to provide an output 126 that is indicative of which of the two envelope voltages (i.e. the first envelope voltage or the second envelope voltage) is the highest. The output of the comparator 124 is provided to the control circuit 116. Upon determining which impedance level results in the highest voltage, the control circuit 116 may be configured to set the impedance tuning circuit 104 to the impedance level that resulted in the highest envelope voltage 122.

The description above provides examples of how the one or more delayed signals may provide for control of one or more other circuits 104, 108, 116 that provide the impedance tuning process. We will now describe an example where the one or more delayed signals have specific functions.

In summary, a first signal received at the antenna is received with the impedance tuning circuit 104 in a default impedance level setting. The envelope detector 106 provides a "first" envelope voltage representative of the received signal, using the default impedance level, to the comparator 124. The "first" envelope voltage is also stored on the capacitor 123. An output of the comparator 124 is provided to the control circuit 116, which initializes the one or more delay lines 112 of the timing circuit 110. The delayed signals from the delay lines are provided back to the control circuit for defining the operation of the measurement circuit 108 and the impedance tuning circuit 104 during a first timing cycle. In fact, as described below, the delayed signals may define the duration of the first timing cycle and subsequent timing cycles. By the end of the first timing cycle, the "first" envelope voltage (or a voltage based thereon) is stored on capacitor 123 and the impedance level of the impedance tuning circuit 104 may be changed ready for receipt of a subsequent signal by the antenna. On receipt of a subsequent signal, a "second" envelope voltage will be generated based on the changed impedance level and provided to the comparator 124 for comparison with the first envelope voltage (or a voltage based thereon) stored on the capacitor 123. The output of the comparator will also start a second timing cycle and the delayed signals from the one or more delay lines may define the time period for which the comparison is made and/or the holding of the "second" envelope voltage on the capacitor 123 depending on how the process is configured.

Thus, a first delayed signal 128 of the one or more delayed signals may define a time period for the measurement circuit 108 to measure the envelope voltage 122. A second delayed signal 130 of the one or more delayed signals may provide a feedback signal to the control circuit 116 indicative of a start of, and duration of, a timing cycle.

It will be appreciated that the control circuit 116 may be configured to operate the comparator 124 of the measurement circuit 108 in two distinct phases. These phases may include but are not limited to a sampling phase and a comparison phase.

In the sampling phase, the measurement circuit 108 is configured to sample and hold the voltage output by the envelope detector 120. In particular, the envelope voltage 122 is tracked for a particular duration and sampled after said duration defined by at least one of the one or more delayed signals. In the example shown the duration is defined by the first delayed signal 128 of the one or more delayed signals. The duration is set such that the envelope detector 120 can accurately sample the actual voltage indicative of the signal received by the antenna. As will be known to the person skilled in the art, RF signals can tend to oscillate when received by an antenna and it takes time for these oscillations to decay before an accurate measurement of the voltage can be made.

When the comparator 124 operates in the comparison phase, the comparator 124 is configured to compare a currently received envelope voltage (representing one of the impedance levels) to a stored envelope voltage (i.e. the previously sampled and held voltage) which represents a different one of the impedance levels. As mentioned, the stored envelope voltage may be stored on the capacitor 123. In some examples the capacitor 123 may be a switched capacitor, thus allowing the stored voltage to be compared to the currently received envelope voltage by disconnecting the capacitor 123 form the envelope detector 120. The switch may be controlled by the control circuit 116 to cause the voltage received by the envelope detector 120 to be held on the capacitor 123 at the relevant time. Such a sample and hold configuration will be familiar to those skilled in the art. However, the control of such a configuration based on delay line signals is advantageous.

In some examples a predetermined voltage offset may be added to one of the inputs of the comparator 124 by a voltage offset component 125. This may be provided to implement a predefined detection threshold. In some examples the voltage offset component 125 may be configured such that the comparator 124 will only provide an output if the voltage difference between the currently received envelope voltage exceeds the stored envelope voltage by the amount defined by the offset voltage component 125.

As mentioned above, the one or more delayed signals act as timing references to cause the control circuit 116 to operate as an asynchronous control logic circuit. To summarize, the one or more delay lines 112 may be implemented as follows:
The control circuit 116 asserts an initialization signal 114 to start a timing cycle based on a signal received at the antenna, such as an RFID initialization signal.

The one or more delay lines 112 provide at least two different timing signals comprising the first delayed signal 128, and the second delayed signal 130.

These first and second delayed signals are provided to the control circuit 116.

The second delayed signal 130 defines a duration of the timing cycle for the control circuit 116.

A pulse width of the first delayed signal 128 is configured to provide timing information to the control circuit 116. In some examples the pulse width or duration of the first delayed signal 128 defines the required waiting periods to ensure proper signal settling and to ensure that the envelope detector 120 accurately measures the voltage at the antenna during both the sampling and comparison phases.

In some embodiments, the delay lines 112 are configured such that the duration of the first delayed signal 128 and the duration of the second delayed signal are of a fixed duration. In some examples the first delayed signal 128 may have the same duration as the second delayed signal 130. In other examples the first delayed signal 128 may have a different duration to the second delayed signal 130. In some examples the delay between the first delayed signal 128 and the second delayed signal 130 may determine the pulse width of the initialization signal 114. In some examples the first delayed signal 128 may be output based on one of a rising edge or a falling edge of the initialization signal and the second delayed signal 130 may be output based on the falling edge or the rising edge of the initialization signal 114.

During the sampling phase the durations of the first delayed signal 128 and the second delayed signal 130 define a period to accurately measure the voltage indicative of the signal received by the antenna.

In some examples, the control circuit 116 may be configured to stop the comparison phase before the end of the duration defined by the first or second delayed signals, is complete based on the output of the comparator 124 to reduce the execution time of the auto-tuning process. In such an example, the control circuit 116 may be configured to, if the output of the comparator 124 indicates that the measured voltage (e.g. the envelope voltage 122) is higher than the voltage measured during the preceding sampling phase (i.e. the voltage held on the capacitor 123), stop the comparison phase and either move on to comparing the measured voltage with a further measured voltage obtained with a different impedance level setting or make a final selection of the impedance level to which the impedance tuning circuit should be set for receipt of future signals. In other examples the delay time of the first and/or second delayed signal may depend on the absolute level of the signal received by the antenna or changes in the level of the signal received by the antenna as measured by the measurement circuit 108 or another sub-circuit of wireless receiver circuit 100 to reduce the execution time of an auto-tuning procedure.

In some examples the control circuit 116 may be configured to set the impedance level once all possible impedance configurations have been applied. In other examples, not all impedance levels may be measured before an impedance level for receipt of future signals is set.

Figure 2 shows an example timing cycle 200. Trace 114 shows the initialization signal provided to the one or more delay lines 112. In some examples, the timing circuit 110 is configured such that a rising edge 202 of the initialization signal 114 causes the generation by the one or more delay lines of the delayed signals 130 and 128. In some examples the delayed signals 128 and 130 may have a predetermined delay relative to the rising edge 202 of the initialization signal 114 and a predetermined duration.

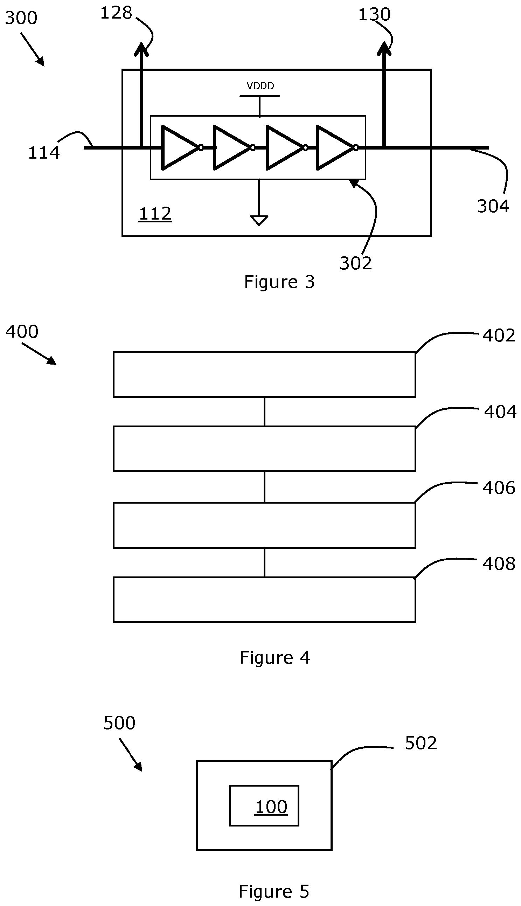

Figure 3 shows an example implementation of the one or more delay lines 112. In some examples the one or more delay lines are configured to receive the initialization signal 114 and to output the delayed signals 128, 130. In the example of figure 3, the first delayed signal 128 is output based on receiving the initialization signal 114 and the second delayed signal 130 is delayed by a number of logic components which in some examples may act as buffers to delay the output of the second delayed signal 130 relative to the first delayed signal 128. In some examples, the one or more delay lines may be considered as operating as an adaptive delay line 300, where the timing characteristics of the one or more delayed signals 128, 130 are controllable based on the signal received by the antenna or changes in the level of the signal received by the antenna.

In other examples a different number of logic components 302 may be implemented between the output of the first delayed signal 128 and the second delayed signal 130 to control the delay between these delayed signals. In other examples, the first delayed signal 128 may coincide with the initialization signal 114 and in other examples the first delayed signal may be delayed relative to the initialization signal 114 by including additional logic components (not shown) before the output of the first delayed signal 128. Figure 3 further shows a feedback signal 304 which in some examples may be used to control /reset the initialization signal. In some examples, the logic components 302 of the one or more delay lines 112 may include specific circuit structures to control the duration of the one or more delay lines 112. Such circuit structures will be known to persons skilled in the art. In some examples, limiting the drive currents or adding load capacitance to some of the logic components 302 of the one or more delay lines 112 may allow for implementing specific timing characteristics such as a specific time delay and pulse duration of the delayed signals 128 and 130 in response to the rising edge or falling edge of the initialization signal 114 or other signal.

In some examples, the other signal may be based on detecting changes of the measured voltage or current indicative of a signal received by the antenna that is determined by a sub-circuit within the wireless receiver circuit. In some examples the sub-circuit within the wireless receiver circuit may include a rectifier circuit configured to provide a supply voltage to the wireless receiver circuit

Returning back to figure 2, the control circuit 116 may be configured such that a rising edge 204 of the delayed signal 128 (which may be based on the feedback signal 304) may cause the reset of the initialization signal 114 in a handshake manner. That is, once the second delayed signal 130 has been output the initialization signal can be reset and the control logic 116 can transition to the next execution state of the antenna tuning procedure based on the reset of the initialization signal 114.

When the control circuit 116 detects the falling edge of the second delayed signal 130, the control circuit 116 may be configured to indicate an end of the timing cycle.

In the example of figure 2, it can be seen that the durations 206, 208 of the first delayed signal 128 and the second delayed signal 130 may be predetermined or otherwise fixed by the configuration of the one or more delay lines 112 of the timing circuit 110. Accordingly, the measurement and comparison performed by the measurement circuit has a predetermined duration in one or more examples.

Figure 2 further shows an output 210 of the comparator 124 received at the control circuit 116 after the end of the second delayed signal 130.

In some other examples, if the envelope voltage settles quickly and a comparison can be made before the end of the second delayed signal 130, an output 212 may be provided. In such a case, the control circuit 116 may have logic configured such that the second delayed signal 130, which defines the duration of the timing cycle for the control circuit 116, is ignored and the impedance matching process can be ended early. Thus, if all the comparisons between the envelope voltages at different impedance levels have been made, the impedance tuning circuit 104 may be set to the impedance level that provides the preferred envelope voltage level for receiving future, further signals irrespective of the state of the second delayed signal 130.

In some other examples the one or more delay lines 112 may be implemented in a controllable way to adapt their respective timing characteristics (e.g., signal delays, pulse widths). Accordingly, in such an example, the generation of the comparison output 212 may cause the control circuit 116 to control the timing circuit 110 to reduce the duration of the second delayed signal 130.

In some examples the control circuit 116 may be configured to receive the output of the comparator 124, and based on the output of the comparator 124, output the initialization signal 114 to the timing circuit 110. In some examples each of the one or more delay lines 112 of the timing circuit 110 may be configured to output a respective one of the one or more delayed signals.

In some examples the control circuit 116 may be further configured to, upon concluding said comparison phase, output a further signal indicating an end of the timing cycle. This can allow the control circuit 116 to end a first timing cycle and initiate a subsequent timing cycle irrespective of whether the first delayed signal 128 or the second delayed signals 130 have been transmitted completely. This can allow for improved execution time and can improve overall efficiency by avoiding unnecessary use of the comparator 124. This mode of operation may be referred to as an example of an auto-tuning system using an adaptive delay line 300, in which the length of the delay line is not the only metric on which to stop the comparison phase.

In other examples the rising edge 216 of the output of the comparator 124 may be indicative of the envelope voltage 122 being higher than the first voltage or the second voltage. Detection of this rising edge 216 may be used by the control circuit 116 to reset the first delayed signal 128 and the second delayed signal 130 to thereby reduce the duration of the first delayed signal 128 and/or the second delayed signal 130.

In some examples durations 206, 208 of the first delayed signal 130 and/or the second delayed signal 128 may depend on the absolute level of the signal received by the antenna or changes in the level of the signal received by the antenna as sensed by the measurement circuit 108 or another sub-circuit of wireless receiver circuit 100 to reduce the execution time of an auto-tuning procedure. It will be appreciated that the absolute level of the signal received by the antenna or changes in the level of the signal received by the antenna may be based on the power of the signal received. In other examples it may be based on the voltage or the current of the signal that is received by the antenna. Figure 4 shows an example method 400 of controlling a wireless receiver circuit 100. The wireless receiver circuit comprising: terminals for coupling to an antenna, an impedance tuning circuit coupled between the terminals and a receiver path; a measurement circuit coupled to the impedance tuning circuit; and a timing circuit comprising one or more delay lines; the method comprising:
providing 402 an initialization signal to the timing circuit based on a signal received by the antenna;
receiving 404 one or more delayed signals from the one or more delay lines;
providing 406 said one or more delayed signals to control of one or both of the impedance tuning circuit and the measurement circuit for use in measuring 408 a voltage indicative of a signal received by the antenna for each of at least two impedance levels provided by the impedance tuning circuit.

Figure 5 shows an example RFID tag 502 comprising the wireless receiver circuit 100 of figure 1.

The instructions and/or flowchart steps in the above figures can be executed in any order, unless a specific order is explicitly stated. Also, those skilled in the art will recognize that while one example set of instructions/method has been discussed, the material in this specification can be combined in a variety of ways to yield other examples as well, and are to be understood within a context provided by this detailed description.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computerreadable or computer-usable storage media or mediums. Such computerreadable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

It will be appreciated that any components said to be coupled may be coupled or connected either directly or indirectly. In the case of indirect coupling, additional components may be located between the two components that are said to be coupled.

In this specification, example embodiments have been presented in terms of a selected set of details. However, a person of ordinary skill in the art would understand that many other example embodiments may be practiced which include a different selected set of these details. It is intended that the following claims cover all possible example embodiments.

## Claims

1. A wireless receiver circuit comprising:
terminals for coupling to an antenna;
an impedance tuning circuit coupled between the terminals and a receiver path, wherein the impedance tuning circuit is controllable to provide at least two impedance levels;
a measurement circuit coupled to the impedance tuning circuit and configured to measure a voltage or current indicative of a signal received by the antenna for each of the at least two impedance levels; and
a timing circuit comprising one or more delay lines, wherein the one or more delay lines are configured to receive an initialization signal from the measurement circuit or the impedance tuning circuit and to provide one or more delayed signals to control of one or both of the measurement circuit and the impedance tuning circuit to measure the voltage for each of the two impedance levels.

2. The wireless receiver circuit of claim 1, wherein said control of one or both of the measurement circuit and the impedance tuning circuit to measure the voltage for each of the two impedance levels comprises:
the impedance tuning circuit being configured to receive at least one of the one or more delayed signals to sequentially select one of the at least two impedance levels.

3. The wireless receiver circuit of claim 1 or claim 2, wherein said control of one or both of the measurement circuit and the impedance tuning circuit to measure the voltage for each of the two impedance levels comprises the measurement circuit being configured to receive at least one of the one or more delayed signals to:
sample and hold a first voltage for a first of the at least two impedance levels;
sample and hold a second voltage for a second of the at least two impedance levels; and
compare the first voltage and the second voltage for determining which of the first impedance level and second impedance level of the at least two impedance levels to select to receive future, further signals.

4. The wireless receiver circuit of any preceding claim, wherein said control of one or both of the measurement circuit and the impedance tuning circuit to measure the voltage for each of the at least two impedance levels includes:
selection of one of the at least two impedance levels based on which impedance level provides the highest voltage or current as measured by the measurement circuit.

5. The wireless receiver circuit of any preceding claim, wherein
the wireless receiver circuit comprises a control circuit comprising one or more logic gates configured to provide for said control of one or both of the measurement circuit and the impedance tuning circuit and wherein the one or more delayed signals are configured to control said one or more logic gates.

6. The wireless receiver circuit of claim 5, wherein
the wireless receiver circuit includes an envelope detector coupled between the impedance tuning circuit and the measurement circuit, the envelope detector configured to output an envelope voltage indicative of an envelope of the signal received by the antenna, wherein the envelope voltage comprises said voltage indicative of the signal received by the antenna.

7. The wireless receiver circuit of claim 6, wherein
the measurement circuit further comprises a comparator configured to compare:
the envelope voltage indicative of the signal received by the antenna for a first of the at least two impedance levels, and
the envelope voltage indicative of the signal received by the antenna for a second of the at least two impedance levels, and
provide an output indicative of which of the envelope voltages is the highest for use in setting the impedance tuning circuit to one of the at least two impedance levels that resulted in the highest envelope voltage.

8. The wireless receiver circuit of claims 6 to 7, wherein
the control circuit is configured to receive the output of the comparator, and based on the output of the comparator, output the initialization signal to the timing circuit, wherein
each of the one or more delay lines of the timing circuit is configured to output a respective one of the one or more delayed signals.

9. The wireless receiver circuit of claim 8, wherein
a first delayed signal of the one or more delayed signals defines a time period for the measurement circuit to measure the envelope voltage, and
a second delayed signal of the one or more delayed signals provides a feedback signal to the control circuit indicative of a start of a timing cycle to initiate said control circuit.

10. The wireless receiver circuit of any preceding claim, wherein the impedance tuning circuit comprises one or more of:
switchable and/or variable capacitors; or
switchable and/or variable inductors
and the switchable and/or variable capacitors or the switchable and/or variable inductors are selectively controlled by the impedance tuning circuit to switch between each of the at least two impedance levels.

11. The wireless receiver circuit of claim 9, wherein
the first delayed signal defines a comparison phase during which the comparator is configured to compare the envelope voltage to the first voltage or the second voltage, and
the second delayed signal defines a sampling phase during which the measurement circuit is configured to:
sample and hold the first voltage for the first of the at least two impedance levels; and
sample and hold the second voltage for the second of the at least two impedance levels.

12. The wireless receiver circuit of claim 5, wherein the timing circuit is configured such that timing characteristics of the one or more delayed signals are based on a signal level or signal level change of: a signal received by the antenna; the initialization signal; a signal output by the impedance tuning circuit; a signal output by the measurement circuit; a signal output by the control circuit; or a further signal received by the control circuit.

13. The wireless receiver circuit of claim 5, wherein
the control circuit is configured provide one or more signals to control the measurement circuit to provide a sample and hold phase having a predetermined duration based on a corresponding duration of at least one of the one or more delayed signals and wherein the control circuit is further configured to end the sample and hold phase prior to expiry of the predetermined duration based on a comparison by the measurement circuit being indicative that a currently selected impedance level of the at least two impedance levels provides a greater voltage than a previously measured voltage resulting from selection of another of the at least two impedance levels.

14. A method of operating a wireless receiver circuit comprising:
terminals for coupling to an antenna, an impedance tuning circuit coupled between the terminals and a receiver path; a measurement circuit coupled to the impedance tuning circuit; and a timing circuit comprising one or more delay lines; the method comprising:
providing an initialization signal to the timing circuit based on a signal received by the antenna;
receiving one or more delayed signals from the one or more delay lines;
providing said one or more delayed signals to control of one or both of the impedance tuning circuit and the measurement circuit for use in measuring a voltage or current indicative of a signal received by the antenna for each of at least two impedance levels provided by the impedance tuning circuit.

15. An RFID tag comprising the wireless receiver circuit of any of claims 1-13.

## Amended claims

### Amended claims in accordance with Rule 137(2) EPC.

1. A wireless receiver circuit comprising:
terminals for coupling to an antenna;
an impedance tuning circuit (104) coupled between the terminals and a receiver path, wherein the impedance tuning circuit is controllable to provide at least two impedance levels;
a measurement circuit (108) coupled to the impedance tuning circuit and configured to measure a voltage or current indicative of a signal received by the antenna for each of the at least two impedance levels; and
a timing circuit (110) comprising one or more delay lines, wherein the one or more delay lines are configured to:
receive an initialization signal from the measurement circuit or the impedance tuning circuit; and
based on the initialization signal, provide one or more delayed signals to control the measurement circuit to measure the voltage or current for each of the two impedance levels;
wherein the one or more delayed signals define a time over which a sample and hold process is performed by the measurement circuit (108).

2. The wireless receiver circuit of claim 1, wherein the impedance tuning circuit is configured to receive at least one of the one or more delayed signals to sequentially select one of the at least two impedance levels.

3. The wireless receiver circuit of claim 1 or claim 2, wherein said control of the measurement circuit to measure the voltage for each of the two impedance levels comprises the measurement circuit being configured to receive at least one of the one or more delayed signals to:
sample and hold a first voltage for a first of the at least two impedance levels;
sample and hold a second voltage for a second of the at least two impedance levels; and
compare the first voltage and the second voltage for determining which of the first impedance level and second impedance level of the at least two impedance levels to select to receive future, further signals.

4. The wireless receiver circuit of any preceding claim, wherein the impedance tuning circuit sequentially selecting one of the at least two impedance levels includes:
selecting of one of the at least two impedance levels based on which impedance level provides the highest voltage or current as measured by the measurement circuit.

5. The wireless receiver circuit of any preceding claim, wherein
the wireless receiver circuit comprises a control circuit comprising one or more logic gates configured to provide for said control of one or both of the measurement circuit and the impedance tuning circuit and wherein the one or more delayed signals are configured to control said one or more logic gates.

6. The wireless receiver circuit of claim 5, wherein
the wireless receiver circuit includes an envelope detector coupled between the impedance tuning circuit and the measurement circuit, the envelope detector configured to output an envelope voltage indicative of an envelope of the signal received by the antenna, wherein the envelope voltage comprises said voltage indicative of the signal received by the antenna.

7. The wireless receiver circuit of claim 6, wherein
the measurement circuit further comprises a comparator configured to compare:
the envelope voltage indicative of the signal received by the antenna for a first of the at least two impedance levels, and
the envelope voltage indicative of the signal received by the antenna for a second of the at least two impedance levels, and
provide an output indicative of which of the envelope voltages is the highest for use in setting the impedance tuning circuit to one of the at least two impedance levels that resulted in the highest envelope voltage.

8. The wireless receiver circuit of claims 6 to 7, wherein
the control circuit is configured to receive the output of the comparator, and based on the output of the comparator, output the initialization signal to the timing circuit, wherein
each of the one or more delay lines of the timing circuit is configured to output a respective one of the one or more delayed signals.

9. The wireless receiver circuit of claim 8, wherein
a first delayed signal of the one or more delayed signals defines a time period for the measurement circuit to measure the envelope voltage, and
a second delayed signal of the one or more delayed signals provides a feedback signal to the control circuit indicative of a start of a timing cycle to initiate said control circuit.

10. The wireless receiver circuit of any preceding claim, wherein the impedance tuning circuit comprises one or more of:
switchable and/or variable capacitors; or
switchable and/or variable inductors
and the switchable and/or variable capacitors or the switchable and/or variable inductors are selectively controlled by the impedance tuning circuit to switch between each of the at least two impedance levels.

11. The wireless receiver circuit of claim 9, wherein
the first delayed signal defines a comparison phase during which the comparator is configured to compare the envelope voltage to the first voltage or the second voltage, and
the second delayed signal defines a sampling phase during which the measurement circuit is configured to:
sample and hold the first voltage for the first of the at least two impedance levels; and
sample and hold the second voltage for the second of the at least two impedance levels.

12. The wireless receiver circuit of claim 5, wherein the timing circuit is configured such that timing characteristics of the one or more delayed signals are based on a signal level or signal level change of: a signal received by the antenna; the initialization signal; a signal output by the impedance tuning circuit; a signal output by the measurement circuit; a signal output by the control circuit; or a further signal received by the control circuit.

13. The wireless receiver circuit of claim 5, wherein
the control circuit is configured provide one or more signals to control the measurement circuit to provide a sample and hold phase having a predetermined duration based on a corresponding duration of at least one of the one or more delayed signals and wherein the control circuit is further configured to end the sample and hold phase prior to expiry of the predetermined duration based on a comparison by the measurement circuit being indicative that a currently selected impedance level of the at least two impedance levels provides a greater voltage than a previously measured voltage resulting from selection of another of the at least two impedance levels.

14. A method of operating a wireless receiver circuit comprising:
terminals for coupling to an antenna, an impedance tuning circuit coupled between the terminals and a receiver path; a measurement circuit coupled to the impedance tuning circuit; and a timing circuit comprising one or more delay lines; the method comprising:
providing an initialization signal to the timing circuit based on a signal received by the antenna;
receiving, based on the initialization signal, one or more delayed signals from the one or more delay lines;
providing said one or more delayed signals to control the measurement circuit for use in measuring a voltage or current indicative of a signal received by the antenna for each of at least two impedance levels provided by the impedance tuning circuit,
wherein the one or more delayed signals define a time over which a sample and hold process is performed by the measurement circuit (108).

15. An RFID tag comprising the wireless receiver circuit of any of claims 1-13.
